# EUROPEAN PATENT SPECIFICATION

(11) **EP 1 700 681 B1**
(45) Date of publication and mention of the grant of the patent: **24.12.2008**
(21) Application number: 06002748.9
(22) Date of filing: 10.02.2006
(51) Int. Cl.: B29C 37/00, B29C 33/42, B29C 45/00, B60R 21/20

(54) **Mold for forming airbag cover and method for forming airbag cover**
Form zur Herstellung einer Airbag-Abdeckung und Verfahren zur Herstellung einer Airbag-Abdeckung
Moule pour produire une couvercle de coussin d'air et procédé pour produire une couvercle de coussin d'air

(30) Priority: 07.03.2005 JP 2005062551
(43) Date of publication of application: 13.09.2006
(73) Proprietor: TAKATA CORPORATION, Minato-ku, Tokyo 106-8510 (JP)
(72) Inventor: Sawada, Masami, Tokyo 106-8510 (JP)
(74) Representative: Vossius & Partner

(56) References cited:
- US-A1- 2003 020 202
- PATENT ABSTRACTS OF JAPAN vol. 1998, no. 01, 30 January 1998 (1998-01-30) & JP 09 240412 A (INOAC CORP), 16 September 1997 (1997-09-16)
- PATENT ABSTRACTS OF JAPAN vol. 2003, no. 12, 5 December 2003 (2003-12-05) & JP 2003 326559 A (TOYODA IRON WORKS CO LTD), 19 November 2003 (2003-11-19)
- PATENT ABSTRACTS OF JAPAN vol. 013, no. 462 (M-881), 19 October 1989 (1989-10-19) & JP 01 178751 A (JAPAN ELECTRON CONTROL SYST CO LTD), 14 July 1989 (1989-07-14)

## Description

The present invention relates to a mold for forming an airbag cover having a tear line, and a method for forming an airbag cover using the mold. The airbag cover may be, for example, a module cover of an airbag device, an inner panel of an instrument panel or the like having an airbag and an inflator therebehind.

An airbag cover having a tear line along which the airbag cover breaks when an airbag is inflated is known in the art. JP-A-9-240412 (Patent Document 1) illustrates a method for forming such an airbag cover having a tear line (see Fig. 9). According to this method, a plate-shaped member is disposed so as to project into a cavity from the inside of the mold so that the tear line is formed by this plate-shaped member. The plate-shaped member has an opening for allowing a resin material to flow therethrough. According to this publication, as described in paragraph 0026, the plate-shaped member is moved outward in the mold when an expanding/hardening process reaches a certain stage or when the expanding/hardening process is finished.

In the plate-shaped member of the mold according to the above-mentioned JP-A-9-240412, the opening for allowing the resin material to flow therethrough is simply a through hole. Therefore, when the plate-shaped member is moved outward after the expanding/hardening process reaches a certain stage, a resin forming body (hardened body) disposed in the opening is roughly cut by the plate-shaped member. As a result, the smoothness in the region around the tear line formed in the airbag cover is degraded.

It is an object of the present invention to solve the above-described problem and to provide a method and a mold for forming an airbag cover in which the smoothness in a region around a tear line is ensured.

A mold for forming an airbag cover according to claim 1 includes a protruding piece for forming a tear line, the protruding piece being capable of moving inward and outward so as to project into a cavity from an inner surface of the mold. The protruding piece has an opening that passes therethrough and allows a resin material to flow from one side of the protruding piece to the other side of the protruding piece in the cavity, and an edged portion is provided at a back edge of the opening in a direction in which the protruding piece moves outward.

According to claim 2, in the mold for forming the airbag cover according to claim 1, the edged portion points toward a front edge of the opening in the direction in which the protruding piece moves outward.

According to claim 3, in the mold for forming the airbag cover according to one of claims 1 and 2, the protruding piece is plate shaped and extends in an extending direction of the tear line. In addition, the protruding piece has a plurality of the openings, the openings being arranged along the extending direction of the protruding piece with intervals, and at least one recess in a front edge of the protruding piece in a direction in which the protruding piece moves inward, the recess being positioned between the adjacent openings and allowing the resin material to flow from the one side of the protruding piece to the other side of the protruding piece.

According to claim 4, in the mold for forming the airbag cover according to one of claims 1 to 3, the size of the cavity in the moving direction of the protruding piece in a region near the protruding piece is increased toward the protruding piece.

A method for forming an airbag cover according to claim 5 includes the step of forming the airbag cover using the mold according to one of claims 1 to 4.

In the mold for forming the airbag cover and the method for forming the airbag cover according to the present invention, the opening formed in the protruding piece allows the resin material to flow from one side of the protruding piece to the other side thereof when the resin material is supplied to the mold. According to the present invention, the edged portion is provided at the back edge of the opening in the direction in which the protruding piece moves outward. When the protruding piece is moved outward, the resin forming body (hardened resin) disposed in the opening is cut by the edged portion. Accordingly, the cut surfaces are smooth and the smoothness in the region around the tear line is ensured.

When the edged portion points toward the front edge of the opening in the direction in which the protruding piece moves outward, the smoothness of the cut surfaces of the resin forming body is increased.

In addition, when the protruding piece has at least one recess in the front edge of the protruding piece in the direction in which the protruding piece moves inward, the recess being positioned between the adjacent openings and allowing the resin material to flow from one side of the protruding piece to the other side thereof, the resin material also flows through the recess when the resin material is supplied to the mold. Accordingly, the entire region of the cavity can be evenly filled with the resin material.

According to the present invention, when the size of the cavity in the moving direction of the protruding piece in a region near the protruding piece is increased toward the protruding piece, the flow resistance generated when the resin material flows near the protruding piece can be further reduced.

An embodiment of the present invention will be described below with reference to the accompanying drawings:
Fig. 1 illustrates an airbag cover formed by a mold according to the embodiment, where (a) shows a front view, (b) shows a sectional view of (a) and (d) taken along line B-B, (c) shows a sectional view of (d) taken along line C-C, and (d) is a sectional view of (b) and (c) taken along line D-D;
Fig. 2 is a sectional view of a portion of the mold around a tear line;

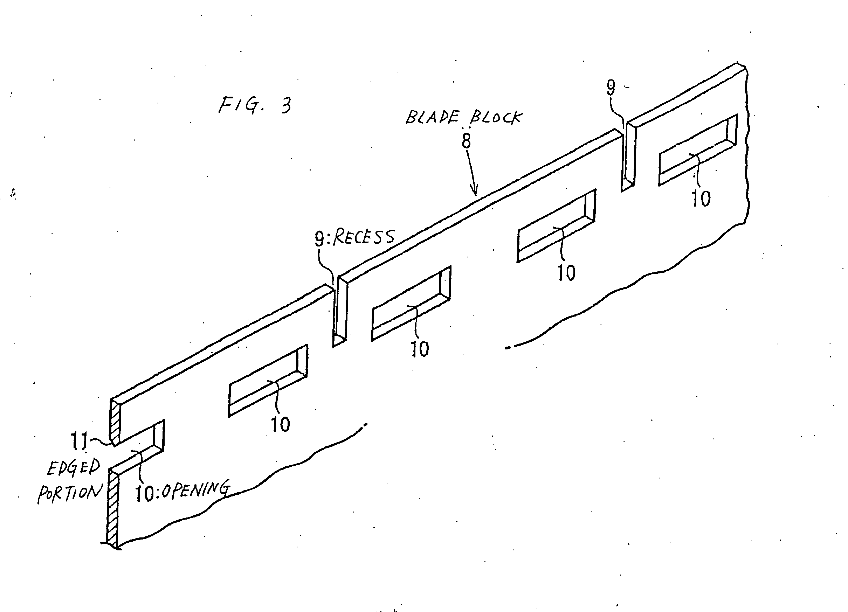

Fig. 3 is a perspective view of a blade block that functions as a protruding piece; and
Fig. 4, (a) and (b) are sectional views illustrating a forming method.

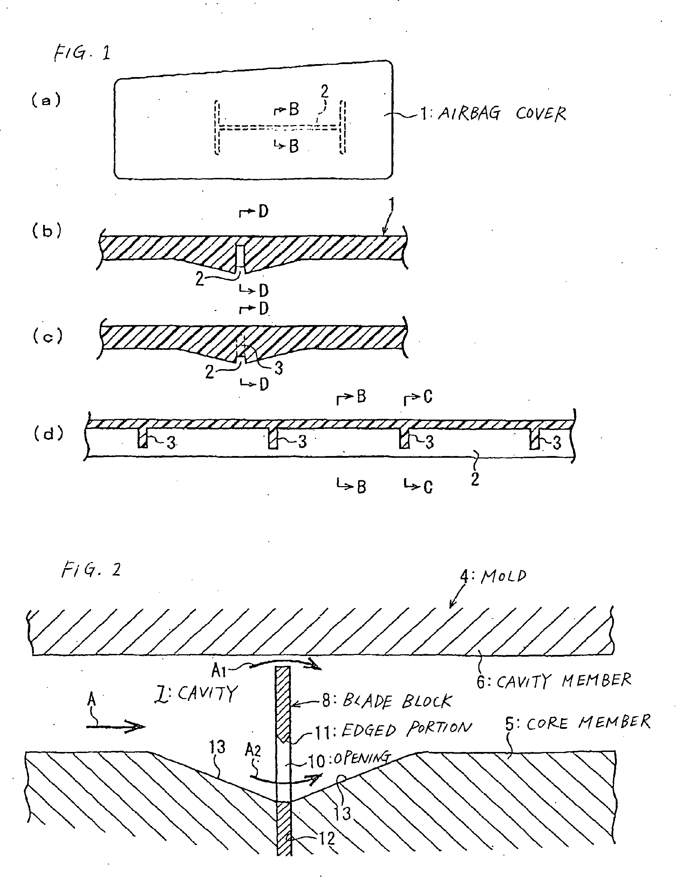

In this embodiment, an airbag cover 1 functions as a module cover for a passenger airbag device. A tear line 2 is formed in the airbag cover 1. The tear line 2 includes a groove that extends along a back surface of the airbag cover 1. In this embodiment, the tear line 2 has an 'H' shape, as shown in Fig. 1(a). However, the tear line 2 may also have a bracket shape, an angular '8' shape, etc. In this embodiment, bridge portions 3 that connect the opposing sides of the tear line 2 are provided. The bridge portions 3 are formed as shallow regions in the tear line 2.

A mold 4 for forming the airbag cover 1 includes a core member 5 and a cavity member 6. A resin material is supplied to a cavity 7 between the core member 5 and the cavity member 6, and is taken out from the mold 4 after a hardening step so as to form the airbag cover 1.

The core member 5 has a plate-shaped blade block 8 that functions as a protruding piece for forming the tear line 2. The blade block 8 has recesses 9 for forming the above-described bridge portions 3.

The blade block 8 also has openings 10 for allowing the resin material to flow from one side of the blade block 8 to the other side, for example, along the arrow A2 in Fig. 2. An edged portion 11 is provided at the top edge of each opening 10 in the figure so as to point downward.

The blade block 8 is inserted into a blade-block storing slit 12 formed in the core member 5. Although not shown in the figure, the blade block 8 is connected to a cylinder device with a shaft, and can move inward and outward in the vertical direction in the figure.

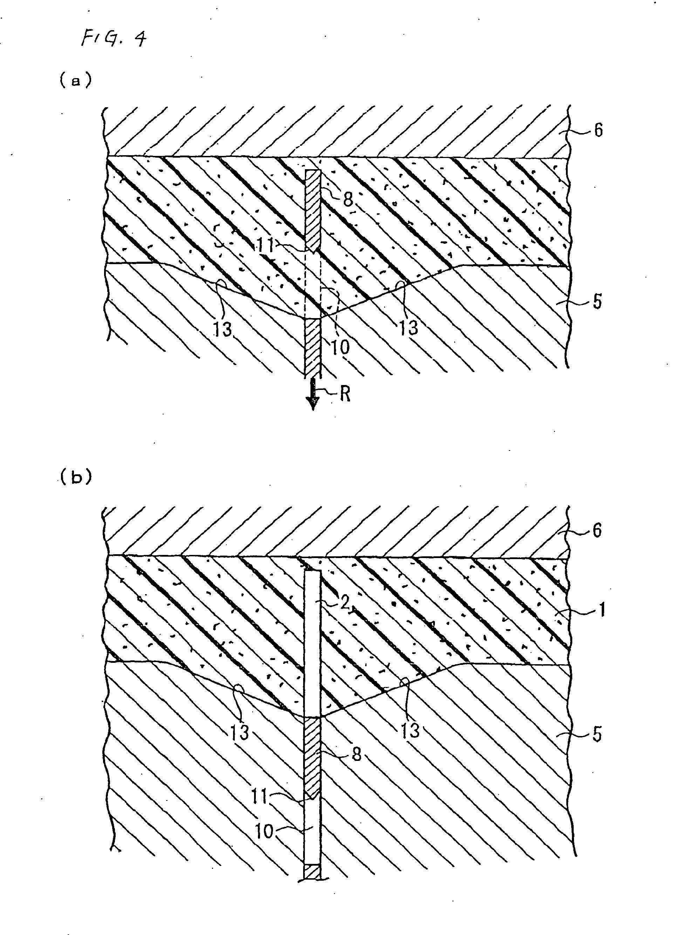

In this embodiment, when the blade block 8 is moved outward to the limit, the inner edge of the blade block 8 is flush with the inner surface of the core member 5, as shown in Fig. 4 (b). In addition, when the blade block 8 is moved inward to the limit, a predetermined gap is provided between the inner edge of the blade block 8 and the cavity member 6, as shown in Figs. 2 and 4(a). In this embodiment, when the blade block 8 is moved inward to the limit, the bottom edge of each opening 10 is flush with the inner surface of the core member 5.

In this embodiment, the core member 5 has inclined surfaces 13 in a region near the blade block 8, the inclined surfaces 13 being inclined such that the size of the cavity 7 (distance between the inner surface of the core member 5 and the inner surface of the cavity member 6) is increased toward the blade block 8. Since the inclined surfaces 13 are provided, the vertical width of the openings 10 is increased and the flow resistance of the resin material from one side of the blade block 8 to the other side is reduced.

The width of the inclined surfaces 13 (width in the direction perpendicular to the blade block 8) is preferably about 3 mm to 10 mm, and more preferably, about 4 mm to 7 mm. In addition, the inclination angle of the inclined surfaces 13 is preferably about 10° to 30°, and more preferably about 15° to 25°.

In a process of forming the airbag cover 1 using the mold 4, injection of the resin material is started after the blade block 8 is moved inward to the limit thereof. A part of the injected resin material travels toward the blade block 8 and tries to pass the blade block 8 as shown by the arrows in Fig. 2. More specifically, since the blade block 8 has the openings 10 and the recesses 9, a part of the resin material that travels along the arrow A flows through the openings 10 to the other side of the blade block 8, as shown by the arrow A2. The remaining part of the resin material flows through a region above the blade block 8 or the recesses 9 to the other side of the blade block 8, as shown by the arrow A1.

Thus, the resin material flows from one side of the blade block 8 to the other side thereof not only via the flow A1 between the blade block 8 and the cavity member 6 but also via the flow A2 through the openings 10 and the flow through the recesses 9. Accordingly, the flow resistance of the resin material is reduced. In addition, the flow resistance of the resin material is also reduced since the inclined surfaces 13 are provided so as to increase the cavity size in a region around the blade block 8, as described above.

Accordingly, the injected resin material can smoothly pass the blade block 8 and the cavity 7 is evenly filled with the resin material. Therefore, defects like sink marks, deformations, and swellings can be prevented from being formed on the airbag cover 1 due to the turbulent flow of resin, nonuniform density, residual stress, etc.

After the injection of the resin material, the blade block 8 is moved outward to the limit to form the tear line 2. Then, the airbag cover 1 is taken out of the mold 4. Since the blade block 8 has the edged portion 11 in each opening 10, the hardened body of resin material disposed in each opening 10 can be cut smoothly. Accordingly, a smooth tear line 2 can be obtained.

The above-described embodiment is simply an example in which the present invention is applied, and the present invention also allows embodiments other than that illustrated in the drawings. For example, although the module cover for the passenger airbag device is described in the above-described embodiment, a module cover for a driver airbag device or an instrument panel may also be formed. In addition, the present invention may also be applied to a process of forming an interior panel, such as a door trim panel, for attaching a side airbag device.

## Claims

1. A mold for forming an airbag cover (1), comprising a protruding piece for forming a tear line (2), the protruding piece being capable of moving inward and outward so as to project into a cavity (7) from an inner surface of the mold (4),
wherein the protruding piece (8) has an opening (10) that passes therethrough and allows a resin material to flow from one side of the protruding piece (8) to the other side of the protruding piece in the cavity (7), **characterized in that**
an edged portion (11) is provided at a back edge of the opening (10) in a direction in which the protruding piece (8) moves outward from the cavity (7).

2. The mold for forming the airbag cover (1) according to claim 1, wherein the edged portion (11) points toward a front edge of the opening (10) in the direction in which the protruding piece (8) moves outward.

3. The mold for forming the airbag cover (1) according to claim 1 or 2, wherein the protruding piece (8) is plate shaped and extends in an extending direction of the tear line (2),
wherein the protruding piece (8) has a plurality of the openings (10), the openings (10) being arranged along the extending direction of the protruding piece (8) with intervals, and
wherein the protruding piece (8) has at least one recess (9) in a front edge of the protruding piece (8) in a direction in which the protruding piece (8) moves inward, the recess (9) being positioned between the adjacent openings (10) and allowing the resin material to flow from the one side of the protruding piece (8) to the other side of the protruding piece (8).

4. The mold for forming the airbag cover (1) according to claim 1, 2, or 3, wherein the size of the cavity (7) in the moving direction of the protruding piece (8) in a region near the protruding piece (8) is increased toward the protruding piece (8).

5. A method for forming an airbag cover, **characterized by** the step of forming the airbag cover (1) using the mold according to any one of claims 1 to 4.

## Patentansprüche

1. Form zum Herstellen einer Airbag-Abdeckung (1), mit einem hervorstehenden Abschnitt zum Formen einer Reißlinie (2), wobei der hervorstehende Abschnitt nach innen und nach außen bewegbar ist, um von einer Innenfläche der Form (4) in einen Hohlraum (7) hineinzuragen,
wobei der hervorstehende Abschnitt (8) eine Durchgangsöffnung (10) aufweist und den Durchfluss eines Harzmaterials von einer Seite zur anderen Seite des hervorstehenden Abschnitts (8) im Hohlraum (7) ermöglicht, **gekennzeichnet durch**
einen Kantenabschnitt (11) an der bezüglich der Auswärtsbewegung des hervorstehenden Abschnitts (8) aus dem Hohlraum (7) hinteren Kante der Öffnung (10).

2. Form zum Herstellen einer Airbag-Abdeckung (1) nach Anspruch 1, wobei der Kantenabschnitt (11) in Richtung einer bezüglich der Auswärtsbewegung des hervorstehenden Abschnitts (8) vorderen Kante der Öffnung (10) zeigt.

3. Form zum Herstellen einer Airbag-Abdeckung (1) nach Anspruch 1 oder 2, wobei der hervorstehende Abschnitt (8) plattenförmig ist und sich in Ausbreitungsrichtung der Reißlinie (2) erstreckt,
wobei der hervorstehende Abschnitt (8) mehrere Öffnungen (10) aufweist, die entlang der Ausbreitungsrichtung des hervorstehenden Abschnittes (8) in Intervallen angeordnet sind, und
wobei der hervorstehende Abschnitt (8) mindestens eine Aussparung (9) in seiner bezüglich der Einwärtsbewegung des hervorstehenden Abschnitts (8) vorderen Kante aufweist, wobei die Aussparung (9) zwischen benachbarten Öffnungen (10) positioniert ist und dem Harzmaterial ermöglicht, von einer Seite zur anderen Seite des hervorstehenden Abschnittes (8) zu fließen.

4. Form zum Herstellen einer Airbag-Abdeckung (1) nach Anspruch 1, 2 oder 3, wobei die Abmessung des Hohlraumes (7) in einem Bereich in der Nähe des hervorstehenden Abschnittes (8) in der Bewegungsrichtung des hervorstehenden Abschnittes (8) zum hervorstehenden Abschnitt (8) hin vergrößert ist.

5. Verfahren zum Herstellen einer Airbag-Abdeckung, **gekennzeichnet durch** Formen der Airbag-Abdeckung (1) mit der Form nach einem der Ansprüche 1 bis 4.

## Revendications

1. Moule pour produire une couvercle de coussin d'air (1), comprenant une partie faisant saillie pour former une ligne de tirage (2), la partie faisant saillie étant capable de bouger vers l'intérieur et vers l'extérieur afin d'avancer dans une cavité (7) à partir d'une surface intérieure de la moule (4),
dans laquelle la partie faisant saillie (8) présente une ouverture (10) de passage et permet à une matériau de résine d'écouler d'un côté de la partie faisant saillie (8) vers l'autre côté de la partie faisant saillie dans la cavité (7), **caractérisée en ce que**
une section de bord (11) est fournie à la section arrière de l'ouverture (10) dans une direction dans laquelle la partie faisant saillie (8) bouge vers l'extérieur de la cavité (7).

2. Moule pour produire une couvercle de coussin d'air (1) selon la revendication 1, dans laquelle la section de bord (11) montre vers un bord avant de l'ouverture (10) dans la direction de mouvement de la partie faisant saillie (8) vers l'extérieur.

3. Moule pour produire une couvercle de coussin d'air (1) selon la revendication 1 ou 2,
dans laquelle la partie faisait saillie (8) est en plate-forme et s'étend dans une direction d'expansion de la ligne de tirage (2),
dans laquelle la partie faisant saillie (8) présente une pluralité d'ouvertures (10), les ouvertures (10) étant disposées le long de la direction d'expansion de la partie faisant saillie (8) en intervalles, et
dans laquelle la partie faisant saillie (8) présente au moins un évidemment (9) dans un bord avant de la partie faisant saillie (8) dans une direction de mouvement de la partie faisant saillie (8) vers l'intérieur, l'évidemment (9) étant positionnée entre les ouvertures adjacentes (10) et permettant au matériau de résine d'écouler de l'un côté de la partie faisant saillie (8) vers l'autre côté de la partie faisant saillie (8).

4. Moule pour produire une couvercle de coussin d'air (1) selon la revendication 1, 2 ou 3,
dans laquelle la taille de la cavité (7) dans la direction de mouvement de la partie faisant saillie (8) dans une région près de la partie faisant saillie (8) est augmentée vers la partie faisant saillie (8).

5. Procédé pour produire une couvercle de coussin d'air, **caractérisé par** l'étape de produire la couvercle de coussin d'air (1) en utilisant la moule selon l'une quelconque des revendications 1 à 4.
